# EUROPÄISCHE PATENTSCHRIFT

(11) **EP 4 140 907 B1**
(45) Veröffentlichungstag und Bekanntmachung des Hinweises auf die Patenterteilung: **23.10.2024**
(21) Anmeldenummer: 22202187.5
(22) Anmeldetag: 10.08.2021
(51) Int. Cl.: B65D 23/02, B29C 63/00, B29C 63/20, B29C 63/36, B65D 23/08, B65D 51/00, B29C 63/42, B29C 63/46

(54) **VORRICHTUNG ZUR UMHUELLUNG UND ENTHUELLUNG EINES GRUNDKOERPERS ODER EINES VERSCHLUSSES EINER MEHRWEGVERPACKUNG**
DEVICE FOR WRAPPING AND UNWRAPPING A BASE BODY OR CLOSURE OF A REUSABLE PACKAGING
DISPOSITIF POUR ENVELOPPER ET DÉCOUVRIR UN CORPS DE BASE OU UNE FERMETURE D'UN EMBALLAGE RÉUTILISABLE

(30) Priorität: 12.08.2020 AT 506752020
(43) Veröffentlichungstag der Anmeldung: 01.03.2023
(62) Teilanmeldung aus: 21190479.2
(73) Patentinhaber: Michalt Technology GmbH, 1070 Wien (AT)
(72) Erfinder: Michalko, Milan, 01001 Zilina (SK)
(74) Vertreter: Speringer, Markus

(56) Entgegenhaltungen:
- WO-A1-2018/056910
- US-A1- 2013 000 263

## Beschreibung

### Technisches Gebiet

Die Erfindung betrifft eine Vorrichtung zur Umhüllung und Enthüllung eines Grundkörpers oder eines Verschlusses einer Mehrwegverpackung, wobei der Grundkörper oder der Verschluss mit einem einseitig geschlossenen Folienschlauch umhüllbar ist, bzw. der Folienschlauch von einem umhüllten Grundkörper oder Verschluss automatisiert entfernbar ist, und wobei die Vorrichtung eine Fördereinrichtung für den Grundkörper oder den Verschluss umfasst, mittels welcher diese zu den einzelnen Arbeitspositionen innerhalb der Vorrichtung bewegbar sind, wobei die Vorrichtung folgende Arbeitspositionen umfasst:
eine Arbeitsposition, an welcher mittels eines Manipulators der einseitig geschlossene Folienschlauch auf einen noch nicht umhüllten Grundkörper oder Verschluss ziehbar ist, wobei nach dem Überziehen des Folienschlauchs am Grundkörper oder am Verschluss an Öffnungen im Boden bzw. in der Deckfläche ein Unterdruck anlegbar ist,
eine Arbeitsposition, an welcher der Folienschlauch durch Hitzeeinwirkung über eine Heizeinrichtung an den Grundkörper oder Verschluss anformbar ist und
eine Arbeitsposition, an welcher ein angeformter Folienschlauch von einem Grundkörper oder einem Verschluss durch Anlegen eines Überdrucks an den Öffnungen im Boden bzw. in der Deckfläche entfernbar ist.

### Stand der Technik

Eine derartige Vorrichtung sowie die dazugehörige Mehrwegverpackung ist in der WO 2018/056910 A1 beschrieben. Der Vorteil der in dieser Druckschrift offenbarten Verpackung sowie der dazugehörigen Vorrichtung besteht darin, dass sie die Vorteile einer günstigen Einwegverpackung mit den Vorteilen einer Mehrwegverpackung vereint. Bei Einwegverpackungen, insbesondere beispielsweise Kunststoffflaschen besteht ein wesentlicher Nachteil darin, dass nach einmaliger Verwendung der gesamte Kunststoffbehälter als Müll anfällt und entweder entsorgt oder aufwändig recycelt werden muss. Mehrwegsysteme haben dahingegen den Nachteil, dass für eine weitere Befüllung der bereits benutzte Behälter aufwändig gewaschen werden muss, damit eine erneute Befüllung, beispielsweise mit Getränken möglich ist. Dieser Waschvorgang bedeutet einen hohen Energie- und Wasseraufwand, sowie eine Schädigung des Mehrwegbehälters, wodurch auch dieser nach einigen wenigen Befüllvorgängen entsorgt werden muss.

Bei der in der oben genannten Druckschrift vorgeschlagenen Verpackung wird ein Grundkörper mit einem Folienschlauch umhüllt. Der einseitig geschlossene Folienschlauch liegt im umhüllten Zustand im gesamten Innenraum des Grundkörpes an und erstreckt sich über die Hauptöffnung über die gesamten äußeren Flächen der Seitenwände hinab. Beim Befüllen mit einem Produkt, kommt dieses somit niemals mit dem Grundkörper in Berührung, sondern immer nur mit dem Folienschlauch. Der Folienschlauch kann nach jeder Verwendung automatisiert von der beschriebenen Vorrichtung entfernt werden. Dadurch entfällt der aufwändige Waschvorgang für den Grundkörper und dieser kann sofort wieder mit einem neuen Folienschlauch umhüllt und wieder befüllt werden. Als Müll fällt lediglich der Folienschlauch an, was eine deutliche Reduktion der Müllmenge gegenüber Einwegverpackungen bedeutet.

Wie eingangs beschrieben, kann das Umhüllen und Enthüllen des Grundkörpers vollständig automatisiert erfolgen. Beim Umhüllen wird ein Grundkörper über eine Fördereinrichtung zu einer Arbeitsposition befördert, bei welcher der Grundkörper mit dem einseitig geschlossenen Folienschlauch überzogen wird. Dazu wird der Folienschlauch an seinem offenen Ende aufgespannt und ausgehend von der Hauptöffnung des Grundkörpers über diesen gezogen. Anschließend wird über die Öffnungen im Boden des Grundkörpers ein Unterdruck angelegt, wodurch das geschlossene Ende des Folienschlauchs über die Hauptöffnung des Grundkörpers ins Innere gezogen wird.

An einer weiteren Arbeitsposition wird nun über eine Heizeinrichtung der Grundkörper mit Folienschlauch erhitzt, wodurch sich der Folienschlauch zusammenzieht und sich an den Grundkörper anformt.

Beim Enthüllen einer bereits benutzten Mehrwegverpackung wird diese ebenfalls über die Fördereinrichtung zu einer weiteren Arbeitsposition befördert, an welcher über die Öffnungen im Boden des Grundkörpers ein Überdruck angelegt wird. Der angeformte Folienschlauch wird dadurch vom Grundkörper ausgeblasen und kann automatisch über eine Absaugvorrichtung einer Entsorgung zugeführt werden.

### Kurzbeschreibung der Erfindung

Aufgabe der vorliegenden Erfindung ist es, die oben in der WO 2018/056910 A1 vorgeschlagene für die Herstellung einer Mehrwegverpackung notwendige Vorrichtung dahingehend zu verbessern, dass die Mehrwegverpackung für weitere Anwendungen nutzbar gemacht wird, und dass die Herstellung der Mehrwegverpackung vereinfacht und beschleunigt werden kann. Dabei soll es insbesondere auch möglich sein, einen wiederverwendbaren Verschluss auf einer gemeinsamen Vorrichtung zu schaffen.

Diese Aufgabe wird durch eine erfindungsgemäße Vorrichtung gelöst, welche dadurch charakterisiert ist, dass der Manipulator einen mit Saugköpfen ausgestatteten Greifrahmen umfasst, welcher zwischen einer zusammengeklappten und einer aufgespannten Position verschwenkbar ist, wobei die Saugköpfe in der zusammengeklappten Position nahe eines Zufuhrbereichs für den Folienschlauch bewegbar sind und einander gegenüberliegen und zwischen sich den zugeführten Folienschlauch nahe dem offenen Ende greifen, und wobei unter Anlegen eines Unterdrucks an den Saugköpfen anschließend der Greifrahmen in seine aufgespannte Position verschwenkbar ist, in welcher der Greifrahmen das offene Ende des Folienschlauchs auseinanderzieht, wonach der Manipulator über einen in der betreffenden Arbeitsposition befindlichen Grundkörper oder Verschluss bewegbar ist, um den Folienschlauch über diesen zu ziehen. Die Folienschläuche können im Zufuhrbereich beispielsweise als Stapel einzelner Folienschläuche vorliegen, wobei der Greifrahmen jeweils einen Folienschlauch vom Ende des Stapels abnimmt und aufspannt. Es ist aber auch denkbar, dass der Folienschlauch als Endlosschlauch auf einer Rolle vorliegt und jeweils durch Verschweißen und Abtrennen in einzelne Folienschläuche passender Größe übergeführt wird.

Der Manipulator lässt sich in senkrechter Richtung bewegen und der Greifrahmen lässt sich zwischen zusammengeklappter und aufgespannter Stellung hin und her bewegen. Idealerweise besteht der Greifrahmen aus vier Eckabschnitten, welche über Gelenke mit 4 Seitenabschnitten verbunden sind. An den vier Seitenabschnitten und zwei gegenüberliegenden Eckabschnitten befinden sich jeweils Saugköpfe, die im zusammengeklappten Zustand einander gegenüberliegen. Mit zumindest zwei der gegenüberliegenden Eckabschnitte ist ein Antrieb verbunden, welcher durch die Veränderung des Abstands der beiden gegenüberliegenden Eckabschnitte zueinander den Greifrahmen entweder aufspannt oder zusammenklappt. Auf diese Weise kann das automatische Überziehen der Folienschläuche auf die Grundkörper bzw. Verschlüsse auf sehr einfache und kostengünstige Weise realisiert werden.

Dabei ist es ein weiteres bevorzugtes Merkmal, dass am Manipulator zusätzlich Luftdüsen vorgesehen sind, über welche nach dem Öffnen des Greifrahmens in die aufgespannte Position Luft in den Folienschlauch einblasbar ist, damit dieser sich vollständig entfaltet. Damit die Folienschläuche leichter über den Grundkörper bzw. Verschluss gezogen werden können, ist es vorteilhaft, diese über einen Großteil der Länge zu entfalten. Dies kann in einfacher Weise durch das Einblasen von Luft in das offene Ende beim Aufspannen des Greifrahmens erfolgen.

Gemäß einem weiteren vorteilhaften Merkmal ist es vorgesehen, dass die Fördereinrichtung jeweils einzelne zwischen den Arbeitspositionen bewegbare Halteelemente auf einer Drehscheibe oder einem Förderband umfasst, wobei ein Halteelement jeweils einen Grundkörper im Bereich des Bodens oder einen Verschluss im Bereich der Deckfläche, beispielsweise über ein Saugelement oder ein Greifelement, hält, und wobei jedes Halteelement einen Dichtring umfasst, welcher bei gehaltenem Grundkörper oder Verschluss am Boden bzw. an der Deckfläche im Randbereich anliegt, und wobei ferner im Halteelement innerhalb der lichten Weite des Dichtrings Durchtrittsöffnungen für das Anlegen einer Unterdruck- bzw. Überdruckquelle vorgesehen sind. Zum Transport innerhalb der Vorrichtung werden die Grundkörper bzw. Verschlüsse jeweils auf Halteelementen vereinzelt und anschließend von Arbeitsposition zu Arbeitsposition bewegt. Die Verschlüsse werden dazu umgedreht eingelegt, sodass die Deckfläche außen dem Halteelement zugewandt ist. Das Halteelement dient dabei einerseits zum Halten des Grundkörpers bzw. Verschlusses während des Transports, und andererseits dazu, den Boden des Grundkörpers bzw. die Deckfläche des Verschlusses abzudichten, damit an den jeweiligen Öffnungen ein Unterdruck oder Überdruck angelegt werden kann. Aus diesem Grund weist das Halteelement einen Dichtungsring auf, wobei in der Mitte, innerhalb des Dichtungsrings jeweils Öffnungen für die Verbindung mit einer Unterdruck- bzw. Überdruckquelle vorgesehen sind. Zur Sicherung des Grundkörpers bzw. Verschlusses kann das Halteelement beispielsweise Greifelemente umfassen, welche sich bei Grundkörpern mit leicht nach innen versetztem Boden bzw. Verschlüssen mit leicht nach innen versetzter Deckfläche, gegen die überstehenden Seitenwände abstützen und den Grundkörper bzw. Verschluss dadurch sichern. Wenn Grundkörper oder Verschlüsse mit im Wesentlichen flachem Boden bzw. flacher Deckfläche eingesetzt werden, so kann anstelle der Greifelemente auch ein Saugelement vorgesehen sein, welches den Boden bzw. die Deckfläche zentral durch Unterdruck festhält.

Schließlich ist es ein weiteres bevorzugtes Merkmal, dass die Heizeinrichtung ein beheizter Ring ist, welcher senkrecht über den Grundkörper oder den Verschluss bewegbar ist. Um den Energieverbrauch beim Aufschrumpfen des Folienschlauchs möglichst gering zu halten, kann anstelle einer Heizkammer oder eines Durchlaufofens, welcher die gesamte Mehrwegverpackung aufnimmt, vorteilhafterweise auch ein bewegbarer Heizring vorgesehen sein. Dieser wird senkrecht von oben nach unten und umgekehrt über den Grundkörper bzw. den Verschluss gestülpt und während des Heizvorgangs auf und ab bewegt. Dadurch kann die nötige Hitze zum Schrumpfen des Folienschlauchs sehr nahe und gezielt an jeden einzelnen Grundkörper bzw. Verschluss übertragen werden.

### Kurze Beschreibung der Zeichnungsfiguren

Die Erfindung wird nun in größerem Detail anhand von Ausführungsbeispielen sowie mit Hilfe der beiliegenden Figuren beschrieben. Dabei zeigen
Fig. 1 eine schematische perspektivische Ansicht einer Ausführungsform eines Verschlusses für eine Mehrwegverpackung,
Fig. 2 eine schematische perspektivische Schnittansicht einer Ausführungsform eines Grundkörpers für eine Mehrwegverpackung,
Fig. 3 eine schematische Aufsicht auf eine Ausführungsform eines Greifrahmens eines Manipulators in der zusammengeklappten Position,
Fig. 4 eine schematische Aufsicht auf den Greifrahmen aus Fig. 3 in der aufgespannten Position,
Fig. 5 eine schematische perspektivische Ansicht einer Ausführungsform eines Halteelements der Fördereinrichtung und
Fig. 6 eine schematische perspektivische Ansicht einer weiteren Ausführungsform eines Halteelements der Fördereinrichtung.

### Beschreibung der Ausführungsarten

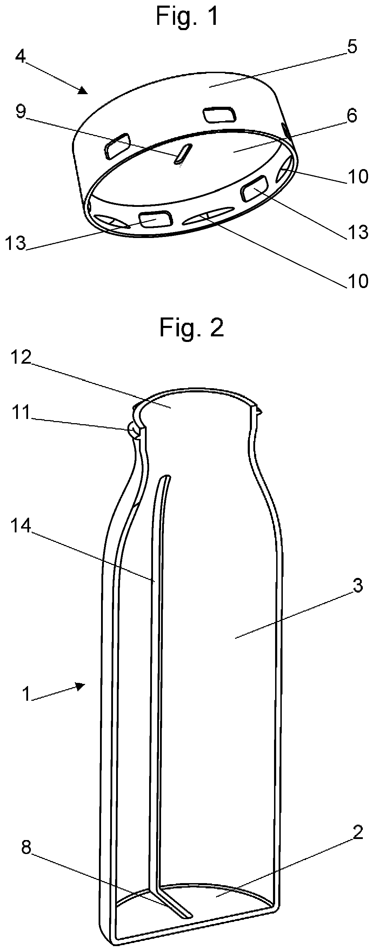

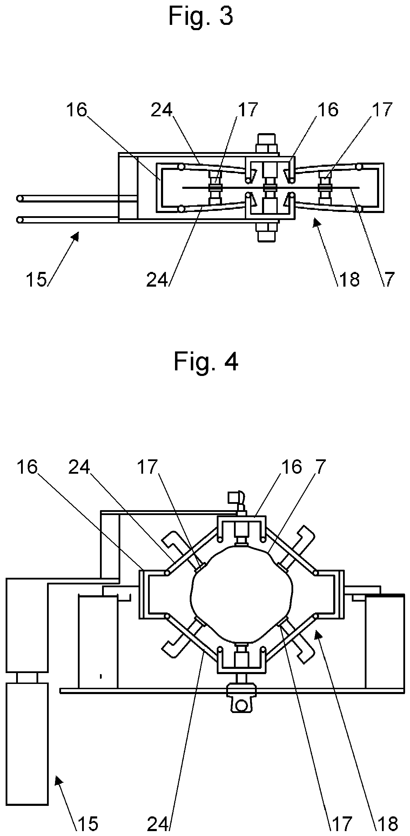

In Fig. 1 ist schematisch ein Verschluss 4 dargestellt. Der Verschluss 4 weist eine Deckfläche 6 auf, an welche Seitenwände 5 anschließen. Damit der Verschluss 4 in einer Mehrwegverpackung eingesetzt werden kann, muss er mit einem einseitig geschlossenen Folienschlau 7 (siehe Fig. 4) überzogen werden. Der Folienschlauch 7 weist vor dem Anformen einen Durchmesser auf, welcher zumindest dem größeren Durchmesser des Verschlusses 4 entspricht und eine Höhe, welche etwa der doppelten Höhe der Seitenwände 5 entspricht.

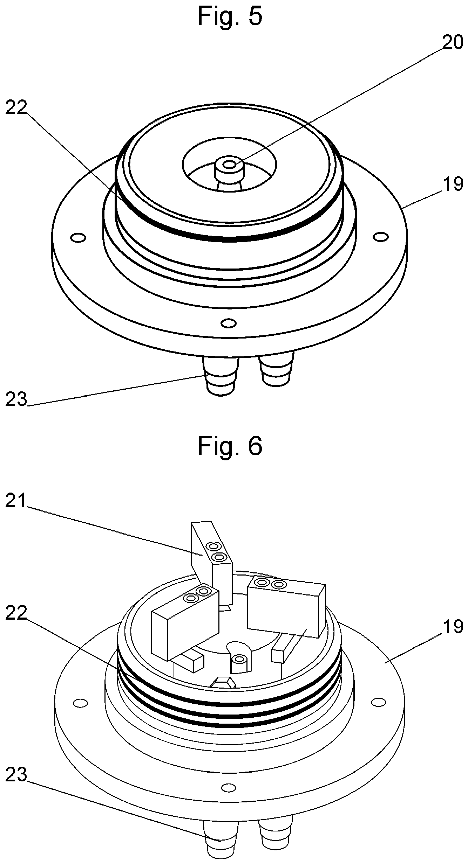

Zum Anformen wird der Verschluss 4 mit der Deckfläche 6 nach unten auf einem Halteelement 19 (siehe Fig. 5) fixiert und in der Vorrichtung zum Umhüllen zu einer Arbeitsposition bewegt, wo der Folienschlauch 7 mit seinem offenen Ende über das offene Ende des Verschlusses 4 gezogen wird. Anschließend wird an der Öffnung 9 in der Deckfläche 6 ein Unterdruck angelegt, wodurch das geschlossene Ende des Folienschlauchs 7 gegen die innere Seite der Deckfläche 6 gezogen wird. In einer weiteren Arbeitsposition innerhalb der Vorrichtung wird anschließend der Verschluss 4 erhitzt, wodurch der Folienschlauch 7 schrumpft und sich beidseitig an die Seitenwände 5 und an die Innenseite der Deckfläche 6 anlegt.

An den inneren Flächen der Seitenwände 5 sind Führungsvorsprünge 10 vorgesehen, welche in ein entsprechendes Gewinde 11 (siehe Fig. 2) am Grundkörper 1 eingreifen können. Damit beim Aufschrumpfen des Folienschlauchs 7 auf den Verschluss 4 eine Faltenbildung insbesondere im Bereich der Führungsvorsprünge 10 vermieden wird, sind Durchbrüche 13 in den Seitenwänden 5 zwischen den Führungsvorsprüngen 10 vorgesehen. Beim Schrumpfvorgang zieht sich der Folienschlauch 7 in den Durchbrüchen 13 verstärkt zusammen und spannt sich so glatt über den Bereich der Führungsvorsprünge 10.

In der Fig. 2 ist schematisch ein geschnittener Grundkörper 1, hier in Form einer Flasche, dargestellt. Der Grundkörper 1 umfasst einen Boden 2, sowie Seitenwände 3. Am oberen Ende befindet sich die Hauptöffnung 12 mit dem Gewinde 11, auf welches der Verschluss 4 aufschraubbar ist. Ferner weist der Grundkörper einen schlitzförmigen Durchbruch 14 auf, welcher sich im Wesentlichen senkrecht entlang der Seitenwand 3 erstreckt. Der schlitzförmige Durchbruch 14 ragt ferner radial vom Rand aus zumindest abschnittsweise in den Boden 2 hinein und bildet hier die Öffnung 8 für das Anlegen des Unter- bzw. Überdrucks aus.

Der Folienschlauch 7 für den Grundkörper 1 weist einen Durchmesser auf, welcher zumindest dem größeren Durchmesser des Grundkörpers entspricht und eine Höhe, welche zumindest der doppelten Höhe der Seitenwand 3 entspricht. Auch hier wird der Grundkörper 1 in einer entsprechenden Vorrichtung mit seinem Boden 2 an einem Halteelement 19 der Fördereinrichtung fixiert und anschließend zu den entsprechenden Arbeitspositionen befördert. Das Überstülpen des Folienschlauchs erfolgt in gleicher Weise, wie beim Verschluss 4. Beim Anlegen des Unterdrucks an der Öffnung 8 im Boden 2 des Grundkörpers 1 dichtet ein Dichtungsring 22 (siehe Fig. 5) an der Kante des Bodens 2 zur Seitenwand 3 hin ab. Der schlitzförmige Durchbruch 14 entlang der Seitenwand 3 wird durch den an der äußeren Fläche der Seitenwand 3 anliegenden Folienschlauch 7 abgedichtet. Durch den aufgebauten Unterdruck wird das geschlossene Ende des Folienschlauchs 7 nach Innen in den Grundkörper 1 gesaugt und kleidet so den Innenraum vollständig aus. Es versteht sich für den Durchschnittsfachmann, dass im Bereich des Gewindes 11 nahe der Hauptöffnung 12 ebenfalls Durchbrüche in der Seitenwand vorgesehen werden können, um ähnlich zu den Durchbrüchen 13 am Verschluss 4 eine Faltenbildung des Folienschlauchs in diesem Bereich zu minimieren.

In den Fig. 3 und 4 ist schematisch ein Greifrahmen 18 eines Manipulators 15 einer erfindungsgemäßen Vorrichtung in einer Aufsicht dargestellt. Der Greifrahmen 18 umfasst vier Eckabschnitthalterungen 16, welche gelenkig mit vier Seitenabschnittrahmen 24 verbunden sind. In der Fig. 3 befindet sich der Greifrahmen in seiner zusammengeklappten Position, in welcher zwei gegenüberliegende Eckabschnitthalterungen 16 und die vier Seitenabschnittrahmen parallel zueinander ausgerichtet sind, während die verbleibenden Eckabschnitthalterungen 16 ihren maximalen Abstand zueinander haben. An den Seitenabschnittrahmen 24 und den beiden unmittelbar aneinander liegenden Eckabschnitthalterungen 16 sind jeweils Saugköpfe 17 vorgesehen, welche in der zusammengeklappten Position das offene Ende eines zugeführten und noch flach zusammengefalteten Folienschlauchs 7 greifen.

Nach Anlegen eines Unterdrucks an den Saugköpfen 17 kann der Greifrahmen 18 in die aufgespannte entfaltete Ausgangposition verschwenkt werden. Dabei bewegen sich die beiden voneinander beabstandeten Eckabschnitthalterungen 16 aufeinander zu, während sich die beiden anderen Eckabschnitthalterungen 16 voneinander wegbewegen. Die Eckabschnitthalterungen 16 dienen zur Rahmenbewegungsstabilisierung bei der Rahmenöffnung. Die Bewegung kann durch eine Hydraulik erfolgen. Durch das Aufspannen des Greifrahmens entfaltet sich der Folienschlauch 7, wie dies in der Fig. 4 zu sehen ist. In dieser Position kann er über einen Grundkörper 1 oder einen Verschluss 4 gezogen werden. Damit sich der Folienschlauch 7 vollständig entfaltet, kann am unteren Ende des Folienschlauchs über Luftdüsen am Manipulator oder im Halteelement 19 Luft eingeblasen werden.

In der Fig. 5 ist eine mögliche Ausführungsform eines Halteelements 19 einer Fördereinrichtung schematisch dargestellt. Dieses Halteelement 19 weist ein zentrales Saugelement 20 auf, welches am Boden 2 eines Grundkörpers 1 oder an der Deckfläche 6 eines Verschlusses 4 angreifen kann, um dieses auf der Fördereinrichtung zu fixieren. Diese Ausführungsform eignet sich besonders für Verschlüsse 4 und Grundkörper 1 mit flacher Deckfläche 6 bzw. flachem Boden 2. Das Halteelement 19 weist ferner einen Dichtungsring 22 auf, welcher den betroffenen Grundkörper 1 oder Verschluss 4 abdichtet, In der Mitte des Dichtungsrings 22 befinden sich Durchtrittsöffnungen 23, an denen eine Unterdruck- oder Überdruckquelle angeschlossen werden kann, um den Folienschlauch über die Öffnungen 8,9 im Grundkörper 1 bzw. Veschluss 4 einzusaugen bzw. auszublasen.

In der Fig. 6 ist schließlich eine Ausführungsform eines Halteelements 19 schematisch dargestellt, welche speziell für Grundkörper 1 und Verschlüsse 4 mit nach innen versetztem Boden 2 bzw. nach innen versetzter Deckfläche 6 geeignet ist. Bei diesen Grundkörpern 1 bzw. Verschlüssen 4 erstrecken sich die Seitenwände 3,5 über den Boden 2 bzw. die Deckfläche 6 hinaus, wodurch ein Steg gebildet wird, an dem die Greifelemente 21 des Halteelements 19 angreifen können, um den Grundkörper 1 bzw. den Verschluss 4 zu fixieren. Abgesehen von dem Greifelement 21 anstelle des Saugelements 20 ist das Halteelement 19 genauso aufgebaut wie jenes aus der Fig. 5.

## Patentansprüche

1. Vorrichtung zur Umhüllung und Enthüllung eines Grundkörpers (1) oder eines Verschlusses (4) einer Mehrwegverpackung, wobei der Grundkörper (1) oder der Verschluss (4) mit einem einseitig geschlossenen Folienschlauch (7) umhüllbar ist, bzw. der Folienschlauch (7) von einem umhüllten Grundkörper (1) oder Verschluss (4) automatisiert entfernbar ist, und wobei die Vorrichtung eine Fördereinrichtung für den Grundkörper (1) oder den Verschluss (4) umfasst, mittels welcher diese zu den einzelnen Arbeitspositionen innerhalb der Vorrichtung bewegbar sind, wobei die Vorrichtung folgende Arbeitspositionen umfasst:
eine Arbeitsposition, an welcher mittels eines Manipulators (15) der einseitig geschlossene Folienschlauch (7) auf einen noch nicht umhüllten Grundkörper (1) oder Verschluss (4) ziehbar ist, wobei nach dem Überziehen des Folienschlauchs (7) am Grundkörper (1) oder am Verschluss (4) an Öffnungen (8,9) im Boden (2) bzw. in der Deckfläche (6) ein Unterdruck anlegbar ist,
eine Arbeitsposition, an welcher der Folienschlauch (7) durch Hitzeeinwirkung über eine Heizeinrichtung an den Grundkörper (1) oder Verschluss (4) anformbar ist und
eine Arbeitsposition, an welcher ein angeformter Folienschlauch (7) von einem Grundkörper (1) oder einem Verschluss (4) durch Anlegen eines Überdrucks an den Öffnungen (8,9) im Boden (2) bzw. in der Deckfläche (6) entfernbar ist **dadurch gekennzeichnet, dass** der Manipulator (15) einen mit Saugköpfen (17) ausgestatteten Greifrahmen (18) umfasst, welcher zwischen einer zusammengeklappten und einer aufgespannten Position verschwenkbar ist,
wobei die Saugköpfe (17) in der zusammengeklappten Position nahe eines Zufuhrbereichs für den Folienschlauch (7) bewegbar sind und einander gegenüberliegen und zwischen sich den zugeführten Folienschlauch (7) nahe dem offenen Ende greifen, und wobei unter Anlegen eines Unterdrucks an den Saugköpfen (17) anschließend der Greifrahmen (18) in seine aufgespannte Position verschwenkbar ist, in welcher der Greifrahmen (18) das offene Ende des Folienschlauchs (7) auseinanderzieht, wonach der Manipulator (15) über einen in der betreffenden Arbeitsposition befindlichen Grundkörper (1) oder Verschluss (4) bewegbar ist, um den Folienschlauch (7) über diesen zu ziehen.

2. Vorrichtung zur Umhüllung und Enthüllung eines Grundkörpers (1) oder eines Verschlusses (4) einer Mehrwegverpackung nach Anspruch 1, **dadurch gekennzeichnet, dass** am Manipulator (15) zusätzlich Luftdüsen vorgesehen sind, über welche nach dem Öffnen des Greifrahmens (18) in die aufgespannte Position Luft in den Folienschlauch (7) einblasbar ist, damit dieser sich vollständig entfaltet.

3. Vorrichtung zur Umhüllung und Enthüllung eines Grundkörpers (1) oder eines Verschlusses (4) einer Mehrwegverpackung nach Anspruch 1 oder 2, **dadurch gekennzeichnet, dass** die Fördereinrichtung jeweils einzelne zwischen den Arbeitspositionen bewegbare Halteelemente (19) auf einer Drehscheibe oder einem Förderband umfasst, wobei ein Halteelement (19) jeweils einen Grundkörper (1) im Bereich des Bodens (2) oder einen Verschluss (4) im Bereich der Deckfläche (6), beispielsweise über ein Saugelement (20) oder ein Greifelement (21), hält, und wobei jedes Halteelement (19) einen Dichtring (22) umfasst, welcher bei gehaltenem Grundkörper (1) oder Verschluss (4) am Boden (2) bzw. an der Deckfläche (6) im Randbereich anliegt, und wobei ferner im Halteelement (19) innerhalb der lichten Weite des Dichtrings (22) Durchtrittsöffnungen (23) für das Anlegen einer Unterdruck- bzw. Überdruckquelle vorgesehen sind.

4. Vorrichtung zur Umhüllung und Enthüllung eines Grundkörpers (1) oder eines Verschlusses (4) einer Mehrwegverpackung nach einem der Ansprüche 1 bis 3, **dadurch gekennzeichnet, dass** die Heizeinrichtung ein beheizter Ring ist, welcher senkrecht über den Grundkörper (1) oder den Verschluss (4) bewegbar ist.

## Claims

1. A device for enclosure and disclosure of a base body (1) or a closure (4) of a reusable package, wherein the base body (1) or the closure (4) can be enveloped with a film hose (7) closed on one side, and the film hose (7) can be automatically removed from an enveloped base body (1) or closure (4), respectively, and wherein the device comprises a conveying device for the base body (1) or the closure (4) by means of which these can be moved to the single working positions within the device, wherein the device comprises the following working positions:
a working position at which by means of a manipulator (15) the film hose (7), which is closed on one side, can be pulled onto a base body (1) or closure (4) which has not been enveloped yet, wherein after pulling over the film hose (7) at the base body (1) or closure (4), a negative pressure can be applied to openings (8, 9) in the bottom (2) and the covering surface (6), respectively,
a working position at which the film hose (7) can be moulded to the base body (1) or closure (4) using heat via a heating device, and
a working position at which a moulded film hose (7) can be removed from a base body (1) or a closure (4) by applying a positive pressure to the openings (8, 9) in the bottom (2) and the covering surface (6), respectively, **characterized in that** the manipulator (15) comprises a gripping frame (18) equipped with suction heads (17), which can be pivoted between a folded position and a stretched position, wherein the suction heads (17) in the folded position next to a feeding region for the film hose (7) can be moved and oppose each other, and grasp the fed film hose (7) between them next to the open end, and wherein by applying a negative pressure to the suction heads (17), subsequently, the gripping frame (18) can be pivoted into its stretched position, in which the gripping frame (18) is pulling apart the open end of the film hose (7), after which the manipulator (15) can be moved over a base body (1) or closure (4) located in the respective working position in order to pull the film hose (7) over the same.

2. The device for enclosure and disclosure of a base body (1) or a closure (4) of a reusable package according to claim 1, **characterized in that** on the manipulator (15) air nozzles are additionally provided, via which air can be blown into the film hose (7) after the gripping frame (18) has been opened into the stretched position, so that the same is completely unfolding.

3. The device for enclosure and disclosure of a base body (1) or a closure (4) of a reusable package according to claim 1 or 2, **characterized in that** the conveying device comprises single holding elements (19) on a turntable or a conveyor belt, each of which can be moved between the working positions, wherein a holding element (19) holds a base body (1) in the region of the bottom (2) or a closure (4) in the region of the covering surface (6), for example via a suction element (20) or a gripping element (21), and wherein each holding element (19) comprises a sealing ring (22) which while holding the base body (1) or the closure (4) abuts the bottom (2) and the covering surface (6) in the peripheral region, respectively, and wherein in the holding element (19) within the clear width of the sealing ring (22) passage openings (23) are further provided for applying a source of a negative pressure or a positive pressure.

4. The device for enclosure and disclosure of a base body (1) or a closure (4) of a reusable package according to any of claims 1 to 3, **characterized in that** the heating device is a heated ring which can be moved vertically over the base body (1) or the closure (4).

## Revendications

1. Dispositif permettant de doter un corps de base (1) ou un bouchon (4) d'un emballage réutilisable d'une gaine et d'en retirer cette dernière, le corps de base (1) ou le bouchon (4) pouvant être entourés par un film tubulaire (7) dont l'une des extrémités est fermée, et le film tubulaire (7) pouvant être retiré de manière automatisée d'un corps de base (1) ou bouchon (4) entouré, et ledit dispositif comprenant un organe de transport qui est destiné au corps de base (1) ou au bouchon (4) et qui permet de déplacer ces derniers à chacun des postes de travail au sein du dispositif, ledit dispositif comprenant les postes de travail suivants :
un poste de travail auquel un organe de manipulation (15) peut tirer le film tubulaire (7) dont l'une des extrémités est fermée sur un corps de base (1) ou un bouchon (4) qui n'est pas encore entouré, pour ensuite pouvoir appliquer, une fois le tirage du film tubulaire (7) terminé, une pression négative à des ouvertures (8, 9) dans le fond (2) du corps de base (1) ou dans la face de couverture (6) du bouchon (4),
un poste de travail où l'on fait en sorte que le film tubulaire (7) vienne épouser le corps de base (1) ou le bouchon (4) en les soumettant à de la chaleur produite au moyen d'un organe de chauffage, et
un poste de travail permettant de retirer un film tubulaire (7) épousant un corps de base (1) ou un bouchon (4) de ce dernier en appliquant une pression positive aux ouvertures (8, 9) dans le fond (2) respectivement la face de couverture (6),
**caractérisé en ce que** l'organe de manipulation (15) comprend un cadre de préhension (18) qui est pourvu de têtes d'aspiration (17) et qui peut être pivoté entre une position repliée et une position déployée, les têtes d'aspiration (17) pouvant, dans la position repliée, être déplacées à proximité d'une zone d'acheminement pour le film tubulaire (7) tout en étant opposées les unes aux autres, pour ainsi saisir le film tubulaire (7) acheminé à proximité de son extrémité ouverte, et l'application d'une pression négative aux têtes d'aspiration (17) permettant ensuite de faire pivoter le cadre de préhension (18) de manière à ce qu'il adopte sa position déployée dans laquelle le cadre de préhension (18) vient écarter le film tubulaire (7) à son extrémité ouverte, l'organe de manipulation (15) pouvant ensuite être déplacé à travers le corps de base (1) ou le bouchon (4) se trouvant au poste de travail correspondant, pour ainsi tirer le film tubulaire (7) à travers ce dernier.

2. Dispositif permettant de doter le corps de base (1) ou le bouchon (4) d'un emballage réutilisable d'une gaine et d'en retirer cette dernière, selon la revendication 1, **caractérisé en ce que** l'organe de manipulation (15) est en outre pourvu de buses d'air permettant, une fois le cadre de préhension (18) ouvert de manière à ce qu'il adopte sa position déployée, d'insuffler de l'air dans le film tubulaire (7) afin que cet dernièr se déplie complètement.

3. Dispositif permettant de doter le corps de base (1) ou le bouchon (4) d'un emballage réutilisable d'une gaine et d'en retirer cette dernière, selon les revendications 1 ou 2, **caractérisé en ce que** ledit organe de transport comprend différents éléments de rétention (19), disposés individuellement sur une plaque tournante ou une bande transporteuse, qui peuvent être déplacés entre des postes de travail, chaque élément de rétention (19) retenant un corps de base (1) au niveau de son fond (2) ou un bouchon (4) au niveau de sa face de couverture (6), par exemple au moyen d'un élément d'aspiration (20) ou d'un élément de préhension (21), et chaque élément de rétention (19) comprenant un joint torique (22) qui vient épouser, lorsque le corps de base (1) ou le bouchon (4) est retenu, la zone marginale du fond (2) respectivement de la face de couverture (6), et l'élément de rétention (19) étant en outre pourvu, au sein de l'ouverture du joint torique (22), d'orifices de passage (23) destinés à être reliés à une source de pression négative ou positive.

4. Dispositif permettant de doter le corps de base (1) ou le bouchon (4) d'un emballage réutilisable d'une gaine et d'en retirer cette dernière, selon l'une des revendications 1 à 3, **caractérisé en ce que** l'organe de chauffage est un anneau chauffé qui peut être déplacé selon une direction verticale à travers le corps de base (1) ou le bouchon (4).
